# FASCICULE DE BREVET EUROPEEN

(11) **EP 0 770 843 B1**
(45) Date de publication et mention de la délivrance du brevet: **19.01.2000**
(21) Numéro de dépôt: 96402255.2
(22) Date de dépôt: 23.10.1996
(51) Int. Cl.: F28C 1/14

(54) **Réfrigérant hybride pour le refroidissement d'eau ou d'autres fluides**
Hybride Kühlanlage zur Kühlung von Wasser oder anderen Flüssigkeiten
Hybrid cooling plant for cooling water or other fluids

(30) Priorité: 23.10.1995 FR 9512442
(43) Date de publication de la demande: 02.05.1997
(73) Titulaire: Air Traitement, 76550 Hautot-sur-Mer (FR)
(72) Inventeur: Girard, Denis, 94200 Ivry-sur-Seine (FR)
(74) Mandataire: Casalonga, Axel

(56) Documents cités:
- CH-A- 493 812
- DE-A- 4 325 945
- FR-A- 2 230 950

## Description

La présente invention se rapporte à un réfrigérant hybride pour le refroidissement d'eau ou de d'autres fluides, comprenant à la fois des surfaces d'échange sans parois ou humides et des surfaces d'échange à parois ou sèches.

Sur un réfrigérant hybride de ce type commercialisé par la demanderesse et utilisé pour le refroidissement d'eau et d'autres liquides, les surfaces d'échange sèches sont directement montées dans le circuit de l'eau à refroidir et sont donc directement traversées par cette eau, laquelle passe ensuite dans le primaire d'un échangeur de chaleur. Les surfaces d'échange sans parois ou humides sont montées dans un circuit secondaire relié au côté secondaire de l'échangeur. En été, les deux types de surfaces d'échange participent au refroidissement, les surfaces d'échange sèches étant traversées par l'eau à refroidir avant que cette dernière passe dans le primaire de l'échangeur, les surfaces d'échange sèches servant ainsi, entre autres, à supprimer ou tout au moins diminuer substantiellement la formation d'un panache qui peut se produire en fonction de la température de l'eau à refroidir ou de la température extérieure de l'air et qui est non seulement inesthétique, mais peut provoquer dans certains cas la formation de verglas. En hiver, il est possible de faire fonctionner le réfrigérant à sec, c'est-à-dire uniquement sur les surfaces d'échange sèches, et d'arrêter et de vidanger le circuit secondaire humide. Toutefois, pour éviter le risque de gel, il est recommandé, voire indispensable dans ce cas d'assurer le fonctionnement hors gel du circuit primaire, c'est-à-dire du circuit d'eau à refroidir, donc d'ajouter un produit anti-gel à l'eau du circuit primaire (circuit primaire glycolé). Or, il est bien connu que l'addition de glycol à l'eau à refroidir, outre son coût, entraîne une diminution des propriétés d'échange de chaleur, donc des performances du circuit primaire. De plus, un système de remplissage automatique de glycol est généralement nécessaire pour assurer la concentration requise en glycol dans le circuit primaire.

La présente invention vise un réfrigérant hybride qui, tout en assurant la suppression ou la diminution de la formation de panache lors du fonctionnement mixte ou hybride (humide-sec), notamment en été permet également un fonctionnement sec, notamment en hiver, sans risque de gel et sans addition de glycol au circuit primaire.

L'invention vise par ailleurs un réfrigérant qui puisse être utilisé indifféremment pour le refroidissement de liquides et de gaz.

Le réfrigérant hybride conforme à l'invention pour le refroidissement d'eau ou d'autres fluides comprend à la fois des surfaces d'échange sans parois ou humides et des surfaces d'échange à parois ou sèches, ces dernières étant disposées en aval des surfaces d'échange humides dans le circuit de ventilation. Ce réfrigérant comprend, en outre, un échangeur avec un primaire traversé par l'eau à refroidir et avec deux secondaires. Les surfaces d'échange humides sont montées dans un circuit secondaire humide relié à l'un des secondaires de l'échangeur et les surfaces d'échange sèches sont montées dans un circuit secondaire sec relié à l'autre secondaire de l'échangeur.

Ainsi, lorsque la quantité de chaleur à extraire de l'eau à refroidir est élevée et/ou que la température de l'air est élevée (notamment en été) les deux circuits secondaires participent au refroidissement. Le circuit secondaire sec peut, pendant les périodes où un gel n'est pas à craindre, fonctionner sans glycol, mais peut également fonctionner en permanence à l'eau glycolée. Le circuit secondaire humide peut avantageusement fonctionner à l'eau non glycolée.

Lorsque la quantité de chaleur à extraire de l'eau à refroidir est faible et/ou lorsque la température de l'air est basse (notamment en hiver), il est possible d'arrêter et de vidanger le circuit secondaire humide, l'eau à refroidir cédant alors sa chaleur uniquement au circuit secondaire sec qui peut alors avantageusement fonctionner à l'eau glycolée afin d'éviter tout risque de gel. Dans ce cas, il n'y a aucune consommation d'eau (due aux pertes sur les surfaces d'échange humides) et du fait de la suppression de tout échange humide, il n'y a aucune formation de panache. Seul le circuit secondaire sec fonctionne, le cas échéant, à l'aide d'eau glycolée, d'où suppression de tout système de remplissage automatique de glycol ou d'autres dépenses pour le maintien hors gel.

De préférence, l'échangeur de chaleur est conçu et les deux circuits secondaires sont reliés à cet échangeur de manière que lors du fonctionnement des deux circuits secondaires, l'eau à refroidir réchauffe le liquide circulant dans le circuit secondaire sec avant de réchauffer le liquide circulant dans le circuit secondaire humide.

Les surfaces d'échange sèches peuvent être avantageusement constituées par une batterie de tubes à ailettes.

Les surfaces d'échange humides sont de préférence constituées par des surfaces d'échange à film du type "packings".

L'échangeur de chaleur est de préférence constitué par un échangeur à plaque en acier inoxydable.

En se référant aux dessins schématiques annexés, on va décrire ci-après plus en détail un mode de réalisation illustratif et non limitatif d'un réfrigérant conforme à l'invention.

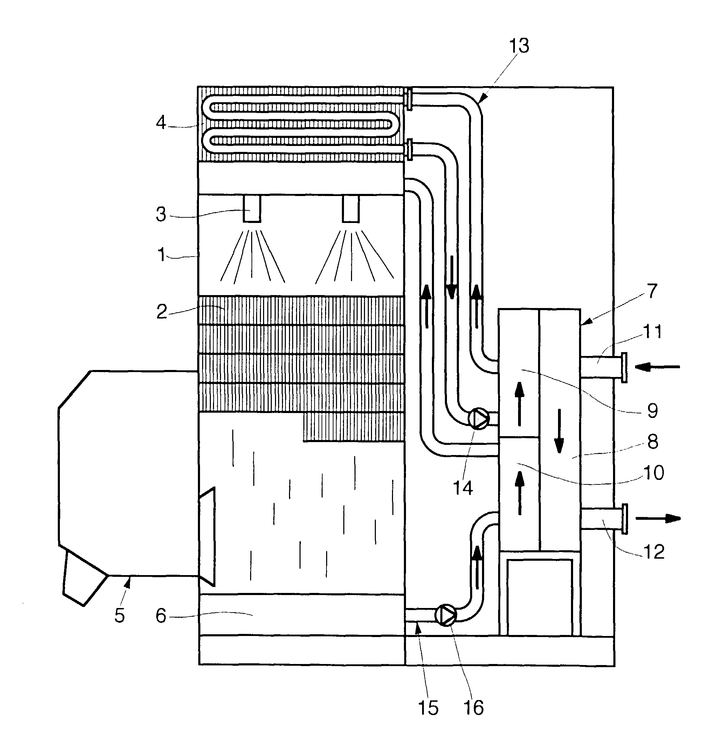

Le réfrigérant tel qu'illustré par la figure unique du dessin comprend une enveloppe verticale 1 dans laquelle sont disposées à mi-hauteur une surface d'échange 2 sans parois ou humide, par exemple du type à film, de préférence sous forme de blocs en éléments en matière plastique dit "packings". La surface d'échange 2 est surmontée d'un système de gicleurs 3. En partie haute, l'enveloppe 1 renferme une surface d'échange 4 à parois ou sèche, représentée sous la forme d'une batterie de tubes à ailettes. En dessous de la surface d'échange 2, un groupe moto-ventilateur 5 est monté latéralement à l'extérieur sur l'enveloppe 1, au-dessus d'un bassin 6 dans lequel est récupéré l'eau projetée par les gicleurs 3 et s'écoulant sous forme de film sur les surfaces d'échange 2.

A côté de l'enveloppe 1 est installé un échangeur 7 qui peut être par exemple un échangeur à plaques en acier inoxydable. L'échangeur 7 comporte un primaire 8 et deux secondaires 9 et 10. Les échangeurs de ce type sont connus en soi.

Sur le primaire, l'échangeur 7 comporte un raccord d'entrée 11 pour l'eau ou autre liquide à refroidir, et un raccord de sortie 12 pour l'eau refroidie.

Le premier secondaire 9 de l'échangeur 7 fait partie d'un premier circuit secondaire 13 qui comprend la batterie 4 ainsi qu'une pompe de circulation 14. Le deuxième secondaire 10 de l'échangeur 7 fait partie d'un deuxième circuit secondaire 15 qui comprend les gicleurs 3, le bassin 6, la surface d'échange 2 ainsi qu'une pompe de circulation 16.

Lorsque la quantité de chaleur à éliminer est importante et/ou la température ambiante est élevée, donc en particulier en été, les deux circuits secondaires 13 et 15 sont en action. L'eau à refroidir passant dans le primaire 8 de l'échangeur 7 réchauffe d'abord, dans le premier secondaire 9 de l'échangeur 7, l'eau (éventuelle glycolée) du circuit secondaire 13 sec laquelle, dans la batterie 4, réchauffe l'air humide ayant traversé la surface d'échange humide 2. Cela diminue le taux d'humidité relative de cet air et supprime ou pour le moins réduit la formation d'un panache. Dans le deuxième secondaire 10 de l'échangeur 7, l'eau à refroidir cède sa chaleur à l'eau du circuit secondaire 15 humide laquelle, projetée par les gicleurs 3 sur la surface d'échange 2 humide, réchauffe l'air véhiculé par le groupe moto-ventilateur 5 en chargeant cet air d'humidité.

Lorsque la quantité de chaleur à éliminer est relativement faible et/ou la température de l'air est basse, notamment en hiver, il est possible de faire fonctionner le réfrigérant uniquement par voie sèche, en arrêtant et en vidangeant le circuit secondaire 15 humide. Le circuit secondaire 13 sec fonctionne dans ce cas de préférence à l'aide d'eau additionnée de glycol, afin d'éviter tout risque de gel. Le fonctionnement sec du réfrigérant élimine toute consommation d'eau et de glycol et supprime totalement la formation d'un panache.

Bien que le réfrigérant selon l'invention ait été décrit ci-dessus dans son application au refroidissement d'eau ou d'autres liquides, il peut également être utilisé pour le refroidissement de gaz, par exemple de gaz d'installations frigorifiques, le réfrigérant servant dans ce cas de condenseur.

## Revendications

1. Réfrigérant hybride pour le refroidissement d'eau ou d'autres fluides comprenant à la fois des surfaces d'échange (2) sans parois ou humides et des surfaces d'échange (4) à parois ou sèches, ces dernières étant disposées en aval des surfaces d'échange humides dans le circuit de ventilation, caractérisé par le fait qu'il comprend un échangeur (7) avec un primaire (8) traversé par l'eau à refroidir et avec deux secondaires (9, 10), les surfaces d'échange (2) humides étant montées dans un circuit secondaire (15) relié à l'un des secondaire (10) de l'échangeur (7) et les surfaces d'échange (4) sèches étant montées dans un circuit secondaire (13) relié à l'autre secondaire (9) de l'échangeur (7).

2. Réfrigérant suivant la revendication 1, caractérisé par le fait que l'échangeur (7) est conçu et les deux circuits secondaires (13, 15) sont reliés à l'échangeur (7) de telle manière que l'eau à refroidir réchauffe d'abord le liquide circulant dans le circuit secondaire (13) sec avant de réchauffer le liquide circulant dans le circuit secondaire (15) humide.

3. Réfrigérant suivant la revendication 1 ou 2, caractérisé par le fait que l'échangeur (7) est du type à plaques, de préférence en acier inoxydable.

4. Réfrigérant suivant l'une quelconque des revendications précédentes, caractérisé par le fait que les surfaces d'échange (4) sèches sont constituées par une batterie de tubes à ailettes.

5. Réfrigérant suivant l'une quelconque des revendications précédentes, caractérisé par le fait que les surfaces d'échange (2) humides sont constituées par des surfaces à film de liquide, surmontées de gicleurs (3).

6. Réfrigérant suivant la revendication 5, caractérisé par le fait que les surfaces d'échange à film sont constituées par des blocs d'éléments en matière plastique (packings).

## Patentansprüche

1. Hybridkühlanlage zur Kühlung von Wasser oder anderen Flüssigkeiten, umfassend zugleich Austauschflächen (2), die ohne Wand oder feucht sind, und Austauschflächen (4), die mit Wand versehen oder trocken sind, wobei die letzteren stromabwärts der feuchten Austauschflächen im Lüftungskreislauf angeordnet sind, dadurch **gekennzeichnet,** daß sie einen Austauscher (7) mit einer Primärseite (8), die von zu kühlendem Wasser durchströmt ist, und mit zwei Sekundärseiten (9, 10) umfaßt, wobei die feuchten Austauschflächen (2) in einem Sekundärkreislauf (15) angebracht sind, der mit einer der Sekundärseiten (10) des Austauschers (7) verbunden ist, und wobei die trockenen Austauschflächen (4) in einem Sekundärkreislauf (13) angebracht sind, der mit der anderen Sekundärseite (9) des Austauschers (7) verbunden ist.

2. Kühlanlage nach Anspruch 1, dadurch **gekennzeichnet,** daß der Austauscher (7) gebaut und die beiden Sekundärkreisläufe (13, 15) mit dem Austauscher (7) verbunden sind, derart, daß das zu kühlende Wasser zunächst die im trockenen Sekundärkreislauf (13) zirkulierende Flüssigkeit erwärmt, bevor es die im feuchten Sekundärkreislauf (15) zirkulierende Flüssigkeit erwärmt.

3. Kühlanlage nach Anspruch 1 oder 2, dadurch **gekennzeichnet,** daß der Austauscher (7) vom Plattentyp, vorzugsweise aus rostfreiem Stahl, ist.

4. Kühlanlage nach einem beliebigen der vorhergehenden Ansprüche , dadurch **gekennzeichnet,** daß die trockenen Austauschflächen (4) aus einer Radiatorrohrbatterie bestehen.

5. Kühlanlage nach einem beliebigen der vorhergehenden Ansprüche, dadurch **gekennzeichnet,** daß die feuchten Austauschflächen (2) aus Flüssigkeitsfilm-Flächen bestehen, über denen Spritzdüsen (3) angebracht sind.

6. Kühlanlage nach Anspruch 5, dadurch **gekennzeichnet,** daß die Film-Austauschflächen aus Blöcken von Elementen aus Kunststoffmaterial (packings) bestehen.

## Claims

1. Hybrid cooling plant for cooling water or other fluids, comprising at the same time exchange surfaces (2) being provided without wall or humid and exchange surfaces (4) being provided with wall or dry, the latter being downstream of the humid exchange surfaces in the ventilation circuit, **characterised** in that it comprises an exchanger (7) having a primary (8) traversed by the water to be cooled and having two secondaries (9, 10), the humide exchange surfaces (2) being mounted in a secondary circuit (15) connected to one of the secondaries (10) of the exchanger (7) and the dry exchange surfaces (4) being mounted in a secondary circuit (13) connected to the other secondary (9) of the exchanger (7).

2. Cooling plant according to claim 1, **characterised** in that the exchanger (7) is designed and the two secondary cirduits (13, 15) are connected to the exchanger (7) in such a manner that the water to be cooled first heats the liquid circulating in the dry secondary circuit (13) before it heats the liquid circulating in the humid secondary circuit (15).

3. Cooling plant according to claim 1 or 2, **characterised** in that the exchanger (7) is of the plate type, preferably of stainless steel.

4. Cooling plant according to any of the preceding claims, **characterised** in that the dry exchange surfaces (4) consist of a battery of gilled pipes.

5. Cooling plant according to any of the preceding claims, **characterised** in that the humid exchange surfaces (2) consist of liquid film surfaces surmounted by spray nozzles (3).

6. Cooling plant according to claim 5, **characterised** in that the film exchange surfaces consist of blocks of elements made of plastic material (packings).
